# EUROPEAN PATENT APPLICATION

(11) **EP 3 290 465 A1**
(43) Date of publication of application: **07.03.2018**
(21) Application number: 16786523.7
(22) Date of filing: 27.04.2016
(51) Int. Cl.: C08J 5/06, C08K 5/14, C08K 9/04, C08L 71/14

(54) **THERMOSETTING RESIN MATERIAL, CURED PRODUCT AND METHOD FOR PRODUCING SAME**

(30) Priority: 30.04.2015 JP 2015092938
(71) Applicant: Hitachi Chemical Co., Ltd., Chiyoda-ku Tokyo 100-6606 (JP); Tokyo Institute of Technology, Tokyo 152-8550 (JP)
(72) Inventor: GOTOH Akihito, Tokyo 100-6606 (JP); KOJIMA Yasushi, Tokyo 100-6606 (JP); KUBOUCHI Masatoshi, Tokyo 152-8550 (JP); TANAKA Hiroha, Tokyo 152-8550 (JP); NAKAI Jun, Tokyo 152-8550 (JP)
(74) Representative: Hoffmann Eitle
(86) International application number: PCT/JP2016/063224
(87) International publication number: WO 2016/175247

(57) **Abstract**

A thermosetting resin material of a first embodiment is a thermosetting resin material comprising a resin composition impregnated into fibers, wherein the resin composition comprises a furan resin, a curing agent and a peroxide, and the fibers are fiber substrates comprising an aldehyde. A thermosetting resin material of a second embodiment comprises fibers, a furan resin, a curing agent and a peroxide, wherein the fibers are fibrous fillers comprising an aldehyde.

## Description

### Technical Field

The present invention relates to a thermosetting resin material in consideration of global environmental conservation, a cured product of the thermosetting resin material, and a method for producing the cured product, and more specifically relates to a thermosetting resin material comprising a furan resin, a cured product of the thermosetting resin material, and a method for producing the cured product.

### Background Art

In recent years, according to an increase in the amount of carbon dioxide generated by burning of fossil resources, a problem related to global warming has attracted attention. In terms of prevention of global warming, effective utilization of biomass (biological resources) has been then reviewed. In recent years, the move to replace plastics such as a packaging material, a member for home electric appliances, and a member for automobiles with plant-derived resins (bioplastics) has been activated.

Specific examples of the plant-derived resins include polylactic acid (PLA) prepared by performing chemical polymerization by use of, as a monomer, lactic acid obtained by fermentation of carbohydrates from potato, sugar cane, corn, or the like; esterified starch containing starch as a main component; a microorganism-produced resin (PHA: PolyHydroxy Alkanoate) which is a polyester produced in the body by microorganisms; and PTT (Poly Trimethylene Telephtalate) whose raw materials are 1,3-propanediol obtained by a fermentation method, and a petroleum-derived terephthalic acid.

In addition, with respect to PBS (Poly Butylene Succinate), a petroleum-derived raw material is currently used, but a technique for preparation as a plant-derived resin is hereafter developed, and a technique for preparing succinic acid being one of main raw materials, derived from plant, is developed.

A resin using such a plant-derived raw material is introduced into broad fields including not only the sanitary field, sundries, and the like, but also OA-related components, interior parts for automobiles, or the like. On the other hand, mechanical strength, heat resistance and electrical insulation property are demanded in applications of electrical equipment/electronic equipment or automobile inner parts in terms of the safety problem. With respect to heat resistance, various attempts have been heretofore made in a resin (in particular, a polylactic resin) using a plant-derived raw material. All of such plant-derived resins, however, are thermoplastic (see Non Patent Literature 1 below), and have the problem of heat resistance.

On the other hand, examples of a resin traditionally known as a plant-derived thermosetting resin include a furan resin. Furfural being a precursor of a furan resin can be obtained by heat-treating a plant raw material (corn-cob, bagasse, chaff, or the like) enriched in hemicellulose, together with an acid. Such furfural is converted into furfuryl alcohol and condensed to thereby obtain a resin which is a furan resin. The furan resin simultaneously satisfies heat resistance, corrosion resistance and electrical insulation property, and therefore is utilized as a corrosion-resistant lining material. In addition, there is widely utilized not only in the above applications, but also as a caking material for templates (see Non Patent Literature 2 below).

In general, a furan resin is cured even singly at any high temperature of 150°C or more, and can be cured even near normal temperature by addition of an acid (sulfonic acid or the like) as a curing agent. Since oxygen is required for a curing reaction of a furan resin, the curing reaction generally progresses from the surface (see Non Patent Literature 3 below). Therefore, it has been necessary to form and cure a film again after a formation/curing reaction of a thin film, in order to obtain a thick film by processing such as lining.

Therefore, in the case where a thick film is tried to be formed at one time, curing of a resin component internally located is insufficient. In addition, if a plate-like molded article was molded in a mold, there was a problem that supply of oxygen not only into the interior portion but also onto the surface was restricted, and curing of a resin was insufficient to thereby make it difficult to obtain a high-strength molded product.

### Citation List

### Non Patent Literatures

Non Patent Literature 1: Biodegradable Polymer Materials edited by Yoshiharu Doi, published by Kogyo Chosakai Publishing Co., Ltd., in 1990
Non Patent Literature 2: Furan Resins written by Toshiyuki Shono, published by Kobunshi Kagaku Kankokai, in 1960
Non Patent Literature 3: Kenzo Takano et al., Plastics, vol. 9, p. 34 (1958)

### Summary of Invention

### Technical Problem

An object of the present invention is then to provide a thermosetting resin material that can obtain a high-strength cured product utilizing a furan resin in terms of a reduction of environmental burdens. Another object of the present invention is to provide a cured product of the thermosetting resin material, and a method for producing the same.

### Solution to Problem

The present inventors have found that the above objects can be achieved by using a fibrous product comprising an aldehyde for a thermosetting resin material comprising at least a furan resin, a curing agent and a peroxide, and thus have completed the present invention.

A thermosetting resin material of a first embodiment of the present invention is a thermosetting resin material comprising a resin composition impregnated into fibers, wherein the resin composition comprises a furan resin, a curing agent and a peroxide, and the fibers are fiber substrates comprising an aldehyde. A thermosetting resin material of a second embodiment of the present invention comprises fibers, a furan resin, a curing agent and a peroxide, wherein the fibers are fibrous fillers comprising an aldehyde.

According to the thermosetting resin material of the present invention, it is possible to obtain a high-strength cured product utilizing a furan resin. In such a thermosetting resin material, the fibers comprise an aldehyde, thereby resulting in an enhancement in adhesiveness of the fibers with the resin to allow a cured product excellent in mechanical strength to be obtained.

The peroxide may comprise one or more selected from hydrogen peroxide, sodium percarbonate, peracetic acid, ammonium persulfate, potassium persulfate, sodium persulfate, hypochlorous acid and chlorous acid.

The fiber may comprise one or more selected from a plant fiber, a carbon fiber, a synthetic fiber and an inorganic fiber.

The content of the peroxide is preferably 0.01 to 5 parts by mass with respect to 100 parts by mass of the furan resin.

The content of the aldehyde is preferably 0.1 to 100 parts by mass with respect to 100 parts by mass of the fibers.

The cured product of the present invention is a cured product of the above-mentioned thermosetting resin material.

A method for producing a cured product of a first embodiment of the present invention comprises a step of curing a thermosetting resin material comprising a resin composition impregnated into fibers to obtain a cured product, wherein the resin composition comprises a furan resin, a curing agent and a peroxide, and the fibers are fiber substrates comprising an aldehyde. A method for producing a cured product of a second embodiment of the present invention comprises a step of curing a thermosetting resin material comprising fibers, a furan resin, a curing agent and a peroxide to obtain a cured product, wherein the fibers are fibrous fillers comprising an aldehyde. According to the method for producing a cured product of the present invention, it is possible to obtain a high-strength cured product utilizing a furan resin.

The method for producing a cured product of the present invention may be aspect where the thermosetting resin material is heated and cured under pressure to obtain the cured product.

### Advantageous Effects of the Invention

According to the present invention, it is possible to obtain a high-strength cured product utilizing a furan resin. In addition, according to the present invention, a furan resin that is a plant-derived thermosetting resin can be used to prepare a cured product (cured product of the thermosetting resin composition) that is in the form of a thick film or a plate other than a thin film and that has not been conventionally obtained, and furthermore, fibers can comprise an aldehyde to thereby provide a cured product excellent in mechanical strength (cured product of the thermosetting resin composition). Therefore, according to the present invention, the effect of a reduction in the amount of fossil resources used and the effect of a reduction in the amount of carbon dioxide emitted can be achieved to provide a thermosetting resin material suitable for a reduction of environmental burdens.

### Description of Embodiments

Hereinafter, embodiments of the present invention will be described in detail. Herein, materials exemplified below may be used singly or in combinations of two or more, unless particularly noted.

A thermosetting resin material (fiber-reinforced composite material) of a first embodiment is a thermosetting resin material comprising a resin composition (thermosetting resin composition) impregnated into fibers, wherein the resin composition comprises a furan resin, a curing agent and a peroxide, and the fibers are fiber substrates comprising an aldehyde. The thermosetting resin material of the first embodiment is, for example, a thermosetting resin material obtained by impregnating fibers with the resin composition. A thermosetting resin material (thermosetting resin composition) of a second embodiment comprises fibers, a furan resin, a curing agent and a peroxide, wherein the fibers are fibrous fillers comprising an aldehyde. Examples of such a fibrous product (fiber substrate and fibrous filler) comprising an aldehyde include an aspect where the aldehyde is contained in the fibrous product, and an aspect where the aldehyde adsorbs to the surface of the fibrous product.

A cured product of the present embodiment is a cured product of the thermosetting resin material of the first embodiment, or a cured product of the thermosetting resin material of the second embodiment. The cured product of the present embodiment may be a molded article.

The furan resin for use in the present embodiment may be any resin as far as it has a furan ring. Examples of a resin currently industrialized as a furan resin include a resin obtained with furfuryl alcohol as a main raw material. Representative examples of the raw material of furfuryl alcohol include corn-cob, bagasse, and chaff which are each a plant raw material including hemicellulose. If these are heated in the presence of an inorganic acid, pentose is produced, and then, a dehydration reaction is performed to obtain a furfural. The furfural can be separated by distillation and further hydrogenated to thereby obtain furfuryl alcohol. A condensate obtained by initial condensation of such furfuryl alcohol corresponds to a furan resin, and is a resin that is brownish and liquid at normal temperature.

In addition, the furan resin is not limited to the above condensate of furfuryl alcohol, and a compound obtained by modifying a condensation resin of furfuryl alcohol, such as a co-condensation resin of furfuryl alcohol-furfural, a furfural-phenol resin, a furfural-ketone resin, a furfuryl alcohol-urea co-condensation resin, a furfuryl alcohol-dimethylol urea resin or a furfuryl alcohol-ammonium thiocyanate-aldehyde resin, can also be used. As the furan resin, a resin in which 30% by mole or more of a condensate of furfuryl alcohol is present is preferable from the viewpoint of being excellent in curability.

The content of the furan resin is preferably 50% by mass or more, more preferably 75% by mass or more, further preferably 90% by mass or more, particularly preferably 95% by mass or more, extremely preferably 96% by mass or more based on the total mass of the resin composition from the viewpoint that internal defects are suppressed to easily obtain a cured product sufficient in mechanical strength. The content of the furan resin is preferably less than 100% by mass, more preferably 99% by mass or less, further preferably 98% by mass or less, particularly preferably 97% by mass or less based on the total mass of the resin composition from the viewpoint that bias in the degree of curing according to the effects of the curing agent and the peroxide is easily suppressed to allow curing to easily progress uniformly.

The curing agent for use in the present embodiment may be any curing agent as far as it can cure the furan resin. Examples of the curing agent include inorganic acids such as sulfuric acid and hydrochloric acid, organic acids such as sulfonic acid (for example, p-toluenesulfonic acid) and oxalic acid, or amine salts and metal salts of these acids. Among them, the curing agent is preferably sulfonic acid, more preferably p-toluenesulfonic acid from the viewpoint of excellent curability.

The content of the curing agent is preferably 0.1 parts by mass or more, more preferably 0.3 parts by mass or more, further preferably 0.5 parts by mass or more, particularly preferably 0.6 parts by mass or more with respect to 100 parts by mass of the furan resin from the viewpoint that rapid curing is easily achieved. The content of the curing agent is preferably 10 parts by mass or less, more preferably 5 parts by mass or less, further preferably 3 parts by mass or less, particularly preferably 1 part by mass or less with respect to 100 parts by mass of the furan resin from the viewpoint that heat generation according to a rapid reaction is easily suppressed to allow handling to be easy. From such viewpoints, the content of the curing agent is preferably 0.1 to 10 parts by mass, more preferably 0.3 to 5 parts by mass, further preferably 0.5 to 3 parts by mass, particularly preferably 0.6 to 1 part by mass with respect to 100 parts by mass of the furan resin.

As the method for curing the furan resin, there is a generally known method where a thermosetting resin composition obtained by mixing an acid (sulfonic acid or the like) serving as the curing agent, an organic filler (a wood powder, pulp, a plant fiber, a carbon fiber, tar pitch, or the like) and an inorganic filler (a glass fiber, silica, talc, calcium carbonate, or the like) is applied or poured into a mold before use, and then heated. The present embodiment is characterized in that the furan resin and the peroxide are used in combination in such a thermosetting resin composition, and also, an aldehyde is added to the fibers.

Examples of the peroxide include hydrogen peroxide, sodium percarbonate, peracetic acid, ammonium persulfate, potassium persulfate, sodium persulfate, hypochlorous acid and chlorous acid, and hydrogen peroxide is preferable from the viewpoint that a component produced after completion of an oxidation action is only water (which is the same as condensation water produced in curing of the furan resin) and from the viewpoint that oxygen is easily produced at a temperature equal to or less than the curing temperature of the furan resin. Hydrogen peroxide can be fed as hydrogen peroxide water.

If the content of the peroxide falls within the range below, curing of the furan resin easily progresses, internal defects hardly occur, and a cured product (cured product of the thermosetting resin composition) excellent in mechanical strength is easily obtained. The content of the peroxide is preferably 0.01 parts by mass or more, more preferably 0.05 parts by mass or more, further preferably 0.1 parts by mass or more, particularly preferably 0.3 parts by mass or more, extremely preferably 0.5 parts by mass or more, very preferably 0.6 parts by mass or more with respect to 100 parts by mass of the furan resin from the viewpoint that curing of the furan resin internally located easily progresses. The content of the peroxide is preferably 5 parts by mass or less, more preferably less than 5 parts by mass, further preferably 3 parts by mass or less, particularly preferably 2 parts by mass or less, extremely preferably 1 part by mass or less with respect to 100 parts by mass of the furan resin from the viewpoint that defects such as air bubbles in the cured product under the influence of a by-product (for example, water) formed by decomposition of the peroxide are easily inhibited, and from the viewpoint that rapid progress of the reaction is easily inhibited to allow easy control of heat generation. From such viewpoints, the content of the peroxide is preferably 0.01 to 5 parts by mass, more preferably 0.01 parts by mass or more and less than 5 parts by mass, further preferably 0.05 to 3 parts by mass, particularly preferably 0.1 to 2 parts by mass, extremely preferably 0.3 to 1 part by mass, very preferably 0.5 to 1 part by mass, still more preferably 0.6 to 1 part by mass with respect to 100 parts by mass of the furan resin.

The aldehyde for use in the present embodiment is not particularly limited, and examples include formaldehyde; paraformaldehyde; saturated aliphatic aldehydes such as acetaldehyde, propylaldehyde, butylaldehyde, isobutylaldehyde, valeraldehyde, capronaldehyde, 2-methylbutylaldehyde, hexylaldehyde, undecanealdehyde, 7-methoxy-3,7-dimethyloctylaldehyde, cyclohexanealdehyde and 3-methyl-2-butylaldehyde; unsaturated aliphatic aldehydes such as acrolein and methacrolein; heterocyclic aldehydes such as furfural and pyridinealdehyde; and aromatic aldehydes such as benzaldehyde, naphthaldehyde, anthracene carboxyaldehyde, phenylbenzaldehyde, anisaldehyde, terephthalaldehyde, phenanthrylaldehyde, salicylaldehyde, phenylacetaldehyde, 3-phenylpropionaldehyde, tolylaldehyde, (N,N-dimethylamino)benzaldehyde and acetoxybenzaldehyde. The aldehyde is preferably an aldehyde containing not only an aldehyde group but also a hydroxyl group in its molecule, more preferably salicylaldehyde from the viewpoint that adhesiveness of the resin with the fibers is further enhanced.

The content of the aldehyde is preferably 0.1 parts by mass or more, more preferably 1 part by mass or more, further preferably 3 parts by mass or more, particularly preferably 7 parts by mass or more, extremely preferably 10 parts by mass or more, very preferably 15 parts by mass or more, still more preferably 20 parts by mass or more with respect to 100 parts by mass of the fibers from the viewpoint that adhesiveness of the fibers with the resin is easily ensured sufficiently to allow a sufficient mechanical strength to be easily obtained. The content of the aldehyde is preferably 100 parts by mass or less, more preferably less than 100 parts by mass, further preferably 50 parts by mass or less, particularly preferably 35 parts by mass or less with respect to 100 parts by mass of the fibers from the viewpoint that the amount of the aldehyde is easily inhibited from being excessive relative to the amount thereof to be consumed at the interface between the fibers and the resin to allow air bubbles due to the unreacted aldehyde to be easily inhibited from occurring in heating and pressurizing, thereby easily suppressing peeling between the fibers and the resin, and the occurrence of internal defects. From such viewpoints, the content of the aldehyde is preferably 0.1 to 100 parts by mass, more preferably 0.1 parts by mass or more and less than 100 parts by mass, further preferably 1 to 50 parts by mass, particularly preferably 3 to 35 parts by mass, extremely preferably 7 to 35 parts by mass, very preferably 15 to 35 parts by mass, still more preferably 10 to 35 parts by mass, further preferably 20 to 35 parts by mass with respect to 100 parts by mass of the fibers.

The fibers (fiber substrate and fibrous filler) for use in the present embodiment are fibers to which the aldehyde is added. Examples of the fibers for use in the present embodiment include a plant fiber, a carbon fiber, a synthetic fiber and an inorganic fiber. The form of the fibers is not particularly limited, and a short fiber, a long fiber, a non-woven cloth, a woven cloth, a compression molded article, or the like can be used. Examples of the plant fiber include fibers of cotton, bamboo, Boehmeria nivea (Ramie), Linum usitatissimum (Linen), Musa textilis (Abaca), Agave sisalana, Corchorus capsularis (Jute), Kenaf, banana, coconut, straw, sugar cane, Cryptomeria japonica, Chamaecyparis obtusa, Picea abies, Pinus, Abies firma, and Larix kaempferi. Examples of the carbon fiber include a pitch-based carbon fiber and a PAN (polyacrylonitrile)-based carbon fiber. Examples of the synthetic fiber include a polyester fiber, a polyamide fiber, an acrylic fiber, a urethane fiber, a polyvinyl chloride fiber, a polyvinylidene chloride fiber, an acetate fiber, an aramid fiber, a nylon fiber and a vinylon fiber. Examples of the inorganic fiber include a glass fiber, an amorphous fiber (rock wool and the like), an alumina fiber, a polycrystalline fiber (zinc oxide and the like) and a single crystal fiber (wollastonite, a potassium titanate fiber and the like). A plant fiber is preferably used because the effect of a reduction in the consumption of fossil resources and the effect of a reduction in the emission of carbon dioxide are both high.

The thermosetting resin material of the present embodiment can also be utilized as a fiber-reinforced resin material (the thermosetting resin material of the first embodiment) having a fiber substrate such as a woven cloth or a non-woven cloth made of a plant fiber, a glass fiber, a carbon fiber or the like, impregnated with the thermosetting resin composition.

In the present embodiment, the thermosetting resin composition may comprise a metal hydroxide such as aluminum hydroxide or magnesium hydroxide; a phosphorous flame retardant such as an aromatic phosphate or red phosphorus; a halogen-based flame retardant, and the like in order to enhance flame retardance.

A method for producing a cured product of the present embodiment (method for curing the furan resin) is characterized in that the furan resin and the peroxide are used in combination and the aldehyde is added to the fibers, and includes, for example, a cured product formation step of curing the thermosetting resin material of the present embodiment, to obtain a cured product. A method for producing a cured product of a first embodiment is a method for producing a cured product by use of the thermosetting resin material of the first embodiment, and includes, for example, a cured product formation step of curing the thermosetting resin material comprising the resin composition (the resin composition comprising the furan resin, the curing agent and the peroxide) impregnated into the fibers (the fiber substrate comprising the aldehyde), to obtain a cured product. A method for producing a cured product of a second embodiment is a method for producing a cured product by use of the thermosetting resin material of the second embodiment, and includes, for example, a cured product formation step of curing the thermosetting resin material comprising the fibers (the fibrous filler comprising the aldehyde), the furan resin, the curing agent and the peroxide, to obtain a cured product. That is, the method for producing a cured product of the present embodiment includes, for example, a cured product formation step of curing the thermosetting resin material of the first embodiment (the thermosetting resin material obtained by impregnating the fiber substrate comprising the aldehyde, with the resin composition comprising the furan resin, the curing agent and the peroxide), or the thermosetting resin material of the second embodiment (the thermosetting resin material comprising the fibrous filler comprising the aldehyde, the furan resin, the curing agent and the peroxide), to obtain a cured product. The cured product formation step may be aspect where the thermosetting resin material is heated and cured under pressure to obtain a cured product. The heating temperature is, for example, 30 to 200°C. The pressure is, for example, 0.1 to 2.0 MPa.

The thermosetting resin material comprising the furan resin (for example, the thermosetting resin material comprising the furan resin as a main component) can be molded by filling in a mold and heat-treating with pressure application. The optimal molding temperature (heating temperature) depends on the amount of the curing agent (acid or the like) to be added, and the range from 30 to 200°C can be suitably used. In addition, a method where the thermosetting resin material filled in the mold is stepwisely heated to, for example, 30°C, 65°C, 115°C and 145°C with being subjected to pressure application can be used to thereby allow a more uniform cured product to be molded. The pressure in molding is, for example, 0.1 to 2.0 MPa.

### Examples

Hereinafter, the present invention will be specifically described with reference to Examples, but the scope of the present invention is not intended to be limited to such Examples.

### <Example 1>

### (Preparation of thermosetting resin composition)

To 120 g of a furan resin (produced by Hitachi Chemical Co., Ltd., VF-303), 1.02 g of p-toluenesulfonic acid as a curing agent and 3.0 g of 35% by mass hydrogen peroxide water were added, and thereafter mixed. Thereafter, vacuum defoaming was performed to obtain a thermosetting resin composition.

### (Production of fiber sheet)

Each of five bundles including 12 g of Kenaf fibers having a length of 20 cm was immersed in an aqueous 5% by mass sodium hydroxide solution, heated at 80°C for 9 hours, and thereafter immersed in 0.01 mol/L hydrochloric acid for 1 hour for neutralization. Thereafter, each bundle of the fibers was sandwiched between stainless plates (length and width: 200 mm, thickness: 2 mm), and heated and pressurized at a pressure of 1.39 MPa by a hot press apparatus at 50°C for 10 minutes. Thereafter, the water content was sufficiently removed by a drier, to produce 7.3 g of each of five fiber sheets (fiber substrates).

### (Production of cured product)

The five fiber sheets (total amount of the fibers: 36.5 g) were stacked, and thereafter uniformly impregnated with 3.5 g of salicylaldehyde (9.6 parts by mass with respect to 100 parts by mass of the fibers (fiber sheets)). Next, the surface of the fiber sheets was coated with 40 g of a furan resin and then impregnated with the thermosetting resin composition. After a stainless mold (length and width: 200 mm, depth: 2 mm) was coated with a release agent (produced by Nagase ChemteX Corporation, Mould Release Agents QZ 13), the fiber sheets impregnated with the thermosetting resin composition, and the thermosetting resin composition were filled in the mold. Thereafter, the mold was installed on the hot press apparatus, and heated and pressurized at a pressure of 1.39 MPa at 30°C for 2 hours, at 65°C for 3 hours, at 115°C for 4 hours, and finally at 145°C for 4 hours, to obtain a molded article (cured product) comprising the furan resin.

### (Bending test)

The resulting molded article was subjected to the following test, and the bending strength and the bending elastic modulus thereof were evaluated.

The molded article was cut out to a size of 15 mm in width, 2.0 mm in thickness and 60 mm in length, to provide a test piece. Five of such test pieces were produced, and a bending test was performed. An Instron type universal tester (Autograph AGS-J manufactured by Shimadzu Corporation) was used, and the head speed was set at 1.0 mm/min and the distance between supports was set at 40 mm, to subject the test pieces to a three-point bending test. The respective average values of the bending strength and the bending elastic modulus of the five test pieces are shown in Table 1.

### <Example 2>

Preparation of a thermosetting resin composition, production of a fiber sheet, production of a cured product and a bending test were performed by the same methods as in Example 1 except that the amount of salicylaldehyde contained in fiber sheets was 7.0 g (19.4 parts by mass with respect to 100 parts by mass of the fibers (fiber sheets)). The respective resulting average values of the bending strength and the bending elastic modulus are shown in Table 1.

### <Example 3>

Preparation of a thermosetting resin composition, production of a fiber sheet, production of a cured product and a bending test were performed by the same methods as in Example 1 except that the amount of salicylaldehyde contained in the fiber sheets was 11.7 g (32.4 parts by mass with respect to 100 parts by mass of the fibers (fiber sheets)). The respective resulting average values of the bending strength and the bending elastic modulus are shown in Table 1.

### <Comparative Example 1>

Preparation of a thermosetting resin composition, production of a fiber sheet, production of a cured product and a bending test were performed by the same methods as in Example 1 except that hydrogen peroxide and salicylaldehyde were not used. The respective resulting average values of the bending strength and the bending elastic modulus are shown in Table 1.

### <Comparative Example 2>

Preparation of a thermosetting resin composition, production of a fiber sheet, production of a cured product and a bending test were performed by the same methods as in Example 1 except that salicylaldehyde was not used. The respective resulting average values of the bending strength and the bending elastic modulus are shown in Table 1.

### <Comparative Example 3>

Preparation of a thermosetting resin composition, production of a fiber sheet, production of a cured product and a bending test were performed by the same methods as in Example 3 except that hydrogen peroxide was not used. The respective resulting average values of the bending strength and the bending elastic modulus are shown in Table 1.

**[Table 1]**

| Sample | Hydrogen peroxide water (35% by mass) (g) | Salicylaldehyde (g) | Bending strength (MPa) | Bending elastic modulus (GPa) |
|---|---|---|---|---|
| Example 1 | 3.0 | 3.5 | 113 | 18 |
| Example 2 | 3.0 | 7.0 | 156 | 19 |
| Example 3 | 3.0 | 11.7 | 196 | 20 |
| Comparative Example 1 | - | - | 59 | 13 |
| Comparative Example 2 | 3.0 | - | 85 | 15 |
| Comparative Example 3 | - | 11.7 | 72 | 15 |

As shown in Table 1, the bending strength of each of the test pieces of the cured products where the furan resin and hydrogen peroxide were used in combination and the aldehyde was added to the fibers was 113 to 196 MPa. On the other hand, the bending strength of the test piece of the cured product in Comparative Example 1 where hydrogen peroxide and the furan resin were not used in combination and the aldehyde was not added to the fibers was 59 MPa, the bending strength of the test piece of the cured product in Comparative Example 2 where, while the furan resin and hydrogen peroxide were used in combination, the aldehyde was not added to the fibers was 85 MPa, the bending strength of the test piece of the cured product in Comparative Example 3 where hydrogen peroxide was not used was 72 MPa, and all the test pieces were significantly poor as compared with those in Examples. As in the present invention, by using the furan resin and the peroxide in combination and adding the aldehyde to the fibers, adhesiveness of the resin with the fibers can be high and also curing progresses to thereby obtain a high-strength molded article.

## Claims

1. A thermosetting resin material comprising:
a resin composition impregnated into fibers,
wherein the resin composition comprises a furan resin, a curing agent and a peroxide, and
the fibers are fiber substrates comprising an aldehyde.

2. A thermosetting resin material comprising:
fibers;
a furan resin;
a curing agent; and
a peroxide,
wherein the fibers are fibrous fillers comprising an aldehyde.

3. The thermosetting resin material according to claim 1 or 2, wherein the peroxide comprises one or more selected from hydrogen peroxide, sodium percarbonate, peracetic acid, ammonium persulfate, potassium persulfate, sodium persulfate, hypochlorous acid and chlorous acid.

4. The thermosetting resin material according to any one of claims 1 to 3, wherein the fibers comprise one or more selected from a plant fiber, a carbon fiber, a synthetic fiber and an inorganic fiber.

5. The thermosetting resin material according to any one of claims 1 to 4, wherein a content of the peroxide is 0.01 to 5 parts by mass with respect to 100 parts by mass of the furan resin.

6. The thermosetting resin material according to any one of claims 1 to 5, wherein a content of the aldehyde is 0.1 to 100 parts by mass with respect to 100 parts by mass of the fibers.

7. A cured product of the thermosetting resin material according to any one of claims 1 to 6.

8. A method for producing a cured product, comprising:
a step of curing a thermosetting resin material comprising a resin composition impregnated into fibers to obtain a cured product,
wherein the resin composition comprises a furan resin, a curing agent and a peroxide, and
the fibers are fiber substrates comprising an aldehyde.

9. A method for producing a cured product, comprising:
a step of curing a thermosetting resin material comprising fibers, a furan resin, a curing agent and a peroxide to obtain a cured product,
wherein the fibers are fibrous fillers comprising an aldehyde.

10. The method for producing a cured product according to claim 8 or 9, wherein the thermosetting resin material is heated and cured under pressure to obtain the cured product.
